# EUROPEAN PATENT SPECIFICATION

(11) **EP 3 121 325 B1**
(45) Date of publication and mention of the grant of the patent: **26.12.2018**
(21) Application number: 14885890.5
(22) Date of filing: 28.11.2014
(51) Int. Cl.: D06F 39/10, D06F 23/04

(54) **THREAD DEBRIS FILTERING APPARATUS**
VORRICHTUNG ZUR FILTERUNG VON FADENRESTEN
APPAREIL DE FILTRATION DE DÉBRIS DE FIL

(30) Priority: 21.03.2014 CN 201410107820
(43) Date of publication of application: 25.01.2017
(73) Proprietor: Haier Group Corporation, Qingdao, Shandong 266101 (CN); Qingdao Haier Washing Machine Co., Ltd., Qingdao, Shandong 266101 (CN)
(72) Inventor: LV, Peishi, Qingdao Shandong 266101 (CN); YANG, Lin, Qingdao Shandong 266101 (CN); TIAN, Yunlong, Qingdao Shandong 266101 (CN); WANG, Lingchen, Qingdao Shandong 266101 (CN); LIU, Zunan, Qingdao Shandong 266101 (CN); JI, Qinglong, Qingdao Shandong 266101 (CN); LI, Weihai, Qingdao Shandong 266101 (CN)
(74) Representative: HGF Limited
(86) International application number: PCT/CN2014/092488
(87) International publication number: WO 2015/139476

(56) References cited:
- WO-A1-2005/118940
- WO-A1-2005/118940
- WO-A1-2013/165203
- CN-A- 101 105 000
- CN-A- 101 105 000
- CN-U- 202 124 757
- CN-Y- 200 967 897
- CN-Y- 200 971 441
- CN-Y- 200 971 441
- CN-Y- 201 087 296
- JP-U- S5 082 869
- US-A1- 2009 229 318

## Description

### TECHNICAL FIELD

The present invention relates to the field of washing machines, and in particular to a thread debris filtering apparatus.

### BACKGROUND

Thread debris is generated during clothes washing by a washing machine. In order to prevent the thread debris from being attached to clothes, a thread debris filtering apparatus is arranged on a wall of an inner drum of the washing machine generally, for collecting the thread debris to achieve a purpose of clothes cleaning. In this way, after the clothes are washed, the thread debris filtering apparatus needs to be detached and cleaned, so as to avoid blockage of the thread debris filtering apparatus.

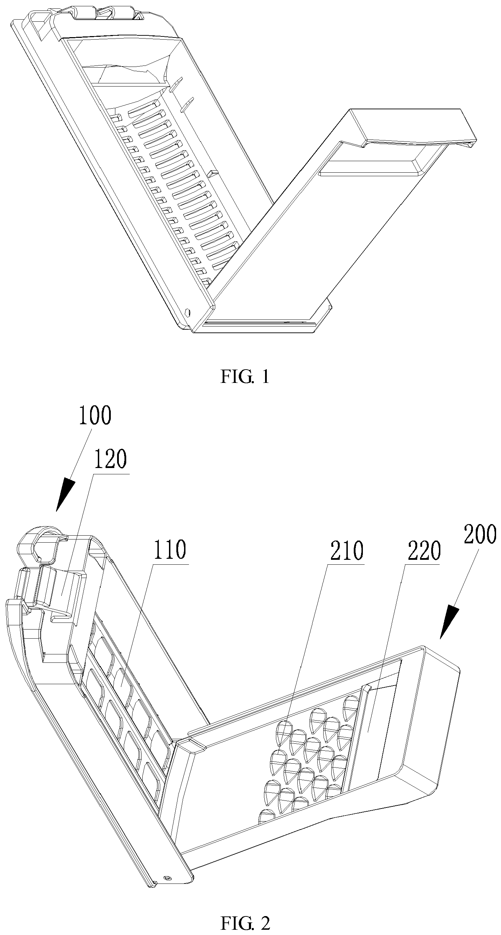

As shown in Fig. 1, in the existing thread debris filter, a net bag is used for collection. During installation, if folds exist on the net bag, a part of the link is blocked from entering the net bag by the folds after washing water flows in the net bag, causing that part of the link flows back into a washing bucket, thereby greatly influencing a collection effect. The net bag becomes dry and hard after long-time use, causing difficult cleaning and easy breeding of bacteria, and generating secondary pollution to the washed clothes, so it is difficult to meet user requirements.

The existing utility model patent with the Chinese patent application No. 201120148645.1 discloses a thread debris filter of an impeller washing machine. The thread debris filter includes a filter front wall, a filter rear wall and a check valve plate, wherein the check valve plate is installed on a water inlet in the lower part of the filter front wall. The thread debris filter is characterized in that the lower part of the filter rear wall and the lower part of the filter front wall are hinged together through a hinge shaft, and the upper part of the filter rear wall and the upper part of the filter front wall are connected together through cooperation between a clamping jaw and a clamping buckle. In the utility model patent, the following technical solution is used: the filter rear wall and the filter front wall are hinged at the lower parts through the hinge shaft, and are abutted at the upper parts through cooperation between the clamping jaw and the clamping buckle. The thread debris filter is simple and convenient to use, facilitating for a user to operate.

The above patent solves shortcomings existing in the net-bag thread debris filter; however, since the water inlet of the thread debris filter of the utility model patent is arranged in the lower part of the filter front wall and the check valve plate is arranged on the water inlet, the problem of backflow of thread debris cannot be solved, although a good filtering effect is achieved.

Document US20090229318A1 discloses a filter assembly of a washer by which particles contained in water can be filtered off in the course of washing the laundry and by which the filtered-off particles are prevented from being discharged from the filter assembly. In a washer including an inner wall having an outlet and a circulation passage provided between the inner wall and a wash tub to enable water to circulate to the outlet from a bottom of the wash tub, the present invention includes a closed-type filter unit configured to filter off particles from the water discharged from the outlet and to prevent the filtered-off particles from being externally discharged.

Document CN200967897Y discloses that a wave-wheel type or agitated washing machine used filter and the washing machine with the filter are equipped with a filter network wall or the filter together with washing tube wall forms a cavity when the washing machine is installed. The utility model contains a frontal wall which orientates to the axis of the washing tube as the washing machine is installed, a back wall behind the frontal wall, a left side wall and a right side wall which are located at the two sides of the washing tube and are used to connect the frontal wall and the back wall. The left wall or/and the right wall is/are equipped with a check valve which is unlocked forward inside and is locked forward outside. The washing machine with the filter is equipped with a guide vane at the external side of the left side wall or/and the right side wall. The bulgy height of the guide vane to the axial direction of the washing tube is the same with the height of the frontal wall, then the height of the guide vane is reduced gradually along the circumference direction of the washing tube and the height of the end is the same with the internal wall of the washing tube.

Document CN200971441Y discloses a washing machine filtering device including a filtering tank inlet installed at the bottom of a washing cylinder and an inserted plate installed on a cylinder inner wall, the inserted plate and the washing cylinder inner wall together form the filtering tank, the filtering box is installed on the outer surface of the inserted plate, a water inlet on top of the filtering box is connected to the filtering tank outlet, a grid outlet connected to washing cylinder inner cavity is installed at the bottom of the filtering box; an impurity attracting bar is installed at the grid outlet.

Document WO2013165203A1 discloses a filter device of a washing machine comprising: a circulation flow path frame which is provided on an inner wall of a tub such that a first overflow path is formed between the inner wall of the tub and the circulation flow path frame; and a filter unit which is provided on the circulation flow path frame such that a second overflow path communicated with the first overflow path is formed between the circulation flow path frame and the filter unit, wherein wash water is discharged to the inside of the tub through a discharge hole of the first overflow path and a discharge hole of the second overflow path, and the discharge hole of the second overflow path is arranged on the lower side of the discharge hole of the first overflow path.

Document JPS5082869U discloses a backflow prevention structure including cylindrical protrusions.

### SUMMARY

An object of the present invention is to provide a thread debris filtering apparatus which does not use a net-bag filtering screen and also plays a good role of preventing backflow of thread debris.

In order to achieve the above object, the following technical solution is used in the present invention:

A thread debris filtering apparatus includes a thread debris filter, wherein the thread debris filter includes a filter front cover and a filter rear cover connected therewith; a water filtering part is arranged on the filter front cover; a water inlet is arranged in the filter rear cover; and backflow prevention structures are arranged on an inner wall of the filter rear cover.

Further, a height of each backflow prevention structure is 1/10 to 1/2 of a distance formed after the filter front cover and the filter rear cover are closed.

Further, the water inlet is arranged in the upper part of the filter rear cover; the backflow prevention structures are arranged below the water inlet and close to the water inlet; and a setting area of the backflow prevention structures is less than or equal to 1/2 of an area of the inner wall of the filter rear cover.

Further, the backflow prevention structures are formed by a series of convex structures, which are arranged on the inner wall of the filter rear cover and arranged in a staggered manner.

Further, each backflow prevention structure is a scaly convex structure, and side section of which is in the shape of straight teeth.

Further, the thread debris filtering apparatus further includes a filtering cover, which is arranged on an inner drum of a washing machine; the thread debris filter is installed on the filtering cover; and a distance is formed between the cover wall of the filter rear cover at the lower part of the water inlet and the inner drum of the washing machine.

Further, a water supply guiding structure is arranged on the filtering cover at the lower part of the thread debris filter; and the water supply guiding structure is formed by recessing a cover wall of the filtering cover towards a direction of the inner drum of the washing machine.

Further, a distance between an inwards recessed inner wall of the water supply guiding structure and the inner drum of the washing machine is less than or equal to a distance between a bottom wall of the filter rear cover and the inner drum of the washing machine.

Further, the water filtering part includes a filtering frame and a filtering screen; the filtering frame is a frame structure provided with a plurality of water-through ports; and the filtering screen is attached to the frame structure.

Further, the water filtering part is formed by small through holes which are arranged in the filter front cover.

The thread debris filter of the present invention is cooperated with the water supply guiding structure peculiar to the filtering cover; washing water flows out through water leakage holes of the filter front cover after it enters the thread debris filter and is filtered; and the scaly structures peculiar to the filter rear cover are capable of blocking the backflow of the thread debris, thereby greatly improving the collection effect. The thread debris filter is convenient to operate because a net bag is cancelled, and the collection effect is not influenced even after long-time use.

The present invention has the following beneficial effects:
1. The thread debris filter of the present invention is connected with the filtering cover in a clamping manner, and is convenient to install and detach.
2. The thread debris filter of the present invention includes the filter front cover and the filter rear cover which are connected through the hinge shaft; and the thread debris filter is simple to open, and convenient for thread debris cleaning.
3. The water inlet of the thread debris filter of the present invention is arranged in the upper part of the filter rear cover, so that the thread debris filtered by the thread debris filter is difficult to flow back into the inner drum of the washing machine.
4. Due to the arrangement of the scaly convex structures on the inner wall of the rear cover of the thread debris filter of the present invention, the thread debris in the thread debris filter can be further prevented from flowing back under an impact of the water flow.
5. Due to the water supply guiding structure cooperated with the thread debris filter and arranged on the filtering cover in the present invention, the washing water guided through the bottom of the inner drum of the washing machine is prevented from colliding the bottom wall of the thread debris filter and baffling back; and the water supply guiding structure is used for directly guiding the washing water to a water flow passage between the filter rear cover and the inner drum, and enabling the washing water to enter the water inlet through the passage, thereby ensuring the filtering effect of the thread debris filter.
6. In the present invention, a better filtering effect can be realized only by installing the filtering screen on the filter front cover or configuring the small filtering holes in the filter front cover instead of using the net-bag filtering screen; and an installation box is more convenient to detach, and more convenient for thread debris cleaning.

### BRIEF DESCRIPTION OF DRAWINGS

Fig. 1 is a structural schematic diagram showing an existing thread debris filter using a net-bag filtering screen;
Fig. 2 is a structural schematic diagram showing a thread debris filter of the present invention;
Fig. 3 is a front view of the present invention; and
Fig. 4 is a section view along A-A plane in the front view of the present invention.

Reference numerals in the drawings are listed. 100: filter front cover; 110: water filtering part; 120: clamping buckle; 200: filter rear cover; 210: backflow prevention structure; 220: water inlet; 300: filtering cover; and 310: water supply guiding structure.

### DETAILED DESCRIPTION

A thread debris filtering apparatus of the present invention is described below in detail in combination with accompanying drawings.

The thread debris filtering apparatus provided by the present invention includes a thread debris filter. As shown in Fig. 1, the thread debris filter includes a filter front cover 100 and a filter rear cover 200 connected with the filter front cover; the filter front cover 100 and the filter rear cover 200 need to be closed when the thread debris filter is installed on a washing machine for use, and a closed filtering inner cavity is formed between the filter front cover 100 and the filter rear cover 200 after they are closed; and when thread debris collected in the inner cavity of the thread debris filter needs to be cleaned, the thread debris filter is taken out, and the filter front cover 100 and the filter rear cover 200 are opened for cleaning. A water filtering part 110 for enabling washing water to pass through and filtering the washing water is arranged on the filter front cover 100; a water inlet 220 is arranged in the filter rear cover 200; backflow prevention structures 210 are arranged on an inner wall of the filter rear cover 200; and the backflow prevention structures 210 are arranged below the water inlet 220.

In order to realize a role of preventing backflow of thread debris of the backflow prevention structures, and avoid an influence on a filtering effect brought by enabling the washing water to enter the inner cavity of the thread debris filter, a certain distance is formed between the backflow prevention structures 210 and an inner wall of the filter front cover 100 when the filter front cover 100 and the filter rear cover 200 are closed. A height of each backflow prevention structure 210 is 1/10 to 1/2, and preferably 1/4, of a distance formed after the filter front cover 100 and the filter rear cover 200 are closed.

In the present invention, the backflow prevention structures 210 are creatively arranged on the inner wall of the filter rear cover 200; and due to the additional arrangement of the backflow prevention structures 210, a phenomenon that the thread debris collected in the thread debris filter flows back under impact of water flow can be effectively prevented. In order to realize the technical effect, the arrangement and the structure of the backflow prevention structures 210 are extremely important.

As an embodiment capable of realizing the above technical effect, the backflow prevention structures 210 can be an integrated structure. Specifically, the backflow prevention structures 210 are convex ribs which are transversally arranged on the inner wall of the filter rear cover 200; in order to avoid an influence on the water flow entering the inner cavity of the thread debris filter, a certain distance needs to be formed between the tops of the convex ribs and the filter front cover 100, and the distance shall not be less than 1/2 of a width of the thread debris filter. Further, the tops of the convex ribs shall be uneven, and can be arranged in an irregular shape or in a regular corrugated shape; and such arrangement aims at that, on one hand, the influence on the entering of the water flow is avoided as far as possible; and on the other hand, the backflow of the collected thread debris is prevented as far as possible. Furthermore, more rows of convex ribs can be arranged downwards below the water inlet 220; however, an area occupied by the convex ribs shall be less than 1/2 of an area of the inner wall of the filter rear cover 200, which aims at ensuring that the thread debris filter has enough space for thread debris collection; and moreover, concave-convex parts at the tops of two adjacent rows of convex ribs shall be arranged in a staggered manner, so that the convex ribs in the present invention realize the optimal effect of preventing the backflow of the thread debris.

The present invention provides preferred backflow prevention structures 210; the lower part of the filter front cover 100 and the lower part of the filter rear wall 200 in the present invention are connected through the hinge shaft; the water inlet 220 is arranged in the upper part of the filter rear wall 200; a plurality of the backflow prevention structures 210 are provided, each backflow prevention structure 210 is arranged independently and small in size, and the backflow prevention structures 210 are arranged close to the water inlet 220 and arrayed downwards below the air inlet 220; and such arrangement aims at that, on one hand, the influence on the entering of the water flow from the air inlet 220 is avoided; and on the other hand, the influence on the thread debris collection is avoided; and a setting area of the backflow prevention structures 210 is less than or equal to 1/2 of an area of the inner wall of the filter rear cover 200, thereby ensuring that the thread debris filter has an enough space for thread debris collection.

In order to guarantee that the backflow prevention structures 210 are capable of playing the role of preventing the backflow of the thread debris, the backflow prevention structures 210 in the present invention are formed by a series of convex structures, which are arranged on the inner wall of the filter rear cover 200 and arranged in a staggered manner. The staggered arrangement of the convex structures enables the filter rear cover 200 as a whole to be transversally limited by the convex structures; in this way, it can ensure that the backflow prevention structures 210 are arranged in the entire transversal direction of the inner wall of the filter rear cover 200, capable of playing a similar role of a railing, so that the collected thread debris cannot pass through in a whole transversal area; and the backflow prevention structures 210 are arranged in the staggered manner, preventing that a vertical channel, through which the thread debris is easy to pass, is formed among the backflow prevention structures.

Each backflow prevention structure 210 in the present invention specifically and preferably is a scaly convex structure, side section of which is in the shape of straight teeth. The scaly convex structure has two opposite slopes, the tops of which are abutted, one slope facing the water inlet 220, and the other slope facing the bottom of the filter rear cover 200, and a gradient of the slope facing the bottom of the filter rear cover 200 is less than that of the slope facing the water inlet 220. Such arrangement aims at that, on one hand, the water flow entering from the water inlet 220 can stably enter the filtering inner cavity along the slower slope, and the thread debris in the water flow can also smoothly slide down to the filtering inner cavity; and on the other hand, the thread debris collected in the thread debris collector flows back and ascends to the backflow prevention structures 210 under the impact of the water flow, and the slope with lower gradient, like a cover is capable of effectively preventing the thread debris from continuing to ascend, thereby effectively preventing the backflow of the thread debris.

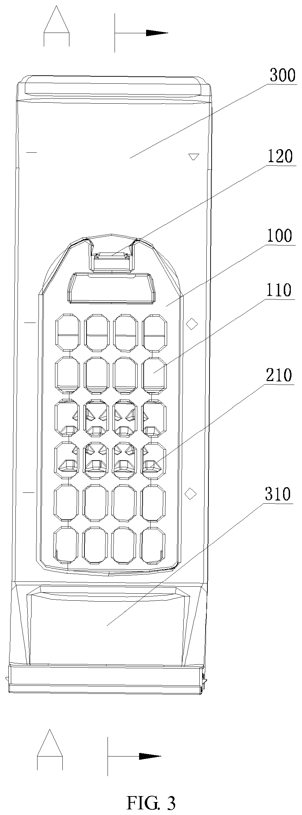

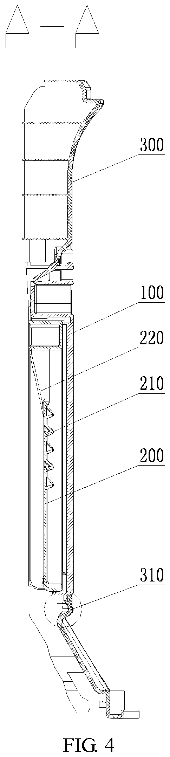

As shown in Figs. 3 and 4, the thread debris filtering apparatus of the present invention further includes a filtering cover 300 which is arranged on an inner drum of the washing machine; the filtering cover 300 is installed on an inner wall of the inner drum of the washing machine from top to bottom; the lower part of the filtering cover 300 is connected to the bottom of the inner drum of the washing machine, and the upper part of it is connected to an opening of the inner drum; and a passage, which is available for the washing water to pass through, is formed among the filtering cover 300, the bottom of the inner drum and the inner drum. The thread debris filter is installed on the filtering cover 300; a clamping buckle 120 is arranged on the upper part of the filter front cover 100 of the thread debris filter, and the thread debris filter is connected with the filtering cover 300 in a clamping manner through the clamping buckle 120; and with the use of the clamping connection, on one hand, stability of installation of the thread debris filter can be guaranteed; and on the other hand, a user is much facilitated to detach the thread debris filter to clean or replace due to the detachable connection manner. The water inlet 220 of the thread debris filter of the present invention is arranged in the upper part of the filter rear cover 200; and therefore, in order to ensure smoothly entering of the washing water, a certain distance is formed between the cover wall of the filter rear cover below the water inlet 220 and the inner drum of the washing machine.

Since the thread debris filter of the present invention is provided with the backflow prevention structures, which occupy a certain space of the filtering inner cavity, in order to ensure the thread debris collection effect of the thread debris filter, a thickness of the thread debris filter of the present invention is greater than that of the existing thread debris filter; and because the filter rear cover 200 moves backwards when the thread debris filter with the increased thickness is installed on the filtering cover 300, and the bottom wall of the thread debris filter stretches out a distance, the water flow ascending from the lower part of the filtering cover 300 has a baffling phenomenon at this place, which is not facilitated for the water flow to smoothly pass through. Therefore, in the present invention, the structure of the filtering cover 300 is creatively designed; a water supply guiding structure 310 is arranged on the filtering cover 300 at the lower part of the thread debris filter of the present invention; and the water supply guiding structure 310 is formed by recessing the cover wall of the filtering cover 300 towards the direction of the inner drum of the washing machine. The water supply guiding structure 310 plays a role of reducing a water-through passage in the filtering cover 300 and changing a flowing direction of the water flow, so that the water flow does not flow towards the bottom wall of the thread debris filter as much as possible, thereby avoiding the baffling phenomenon.

In order to guarantee that the water supply guiding structure is capable of furthest preventing the baffling, a distance between the inwards recessed inner wall of the water supply guiding structure 310 and the inner drum of the washing machine is less than or equal to a distance between the bottom wall of the filter rear cover 200 and the inner drum of the washing machine; preferably, the distance between the inwards recessed inner wall of the water supply guiding structure 310 and the inner drum of the washing machine is equal to the distance between the bottom wall of the filter rear cover 200 and the inner drum of the washing machine, in this way, the baffling is avoided while a highest possible water inflow is ensured.

The water filtering part 110 plays a role of enabling the water flow entering the filtering inner cavity of the thread debris filter to flow out, filtering out the thread debris in the water flow and reserving the thread debris in the thread debris filter. Therefore, the water filtering part 110 in the present invention includes a filtering frame and a filtering screen; the filtering frame is a frame structure provided with a plurality of water-through ports; and the filtering screen is attached to the frame structure.

As another preferred embodiment, the water filtering part 110 in the present invention can also be formed by small through holes which are arranged in the filter front cover 100.

The thread debris filter of the present invention is cooperated with the water supply guiding structure 310 peculiar to the filtering cover 300; the washing water flows out through the water filtering part 110 of the filter front cover 100 after it enters the thread debris filter through the water inlet 220 and is filtered; and the scaly backflow prevention structures 210 peculiar to the inner wall of the filter rear cover 200 are capable of blocking the backflow of the thread debris, thereby greatly improving the collection effect. Meanwhile, the thread debris filter of the present invention is more convenient to operate because a net bag is cancelled, and the collection effect is not influenced even after long-time use.

The above only describes preferred embodiments of the present invention and is not intended to limit the present invention in any form; although the present invention is already disclosed with the above preferred embodiments, the preferred embodiments are not used to limit the present invention; those skilled in the art knowing the patent can alter or modify the above proposed technical contents to obtain an equally-changed equivalent embodiment without departing from the scope of the technical solution of the present invention; however, any simple alterations, equivalent changes and modifications made to the above embodiments according to the technical nature of the present invention shall still fall within the scope of the solution of the present invention without departing from the content of the technical solution of the present invention.

## Claims

1. A thread debris filtering apparatus for a washing machine, comprising a thread debris filter, wherein the thread debris filter comprises a filter front cover (100) and a filter rear cover (200) connected therewith; a water filtering part (110) is arranged on the filter front cover (100); and a water inlet (220) is arranged in the filter rear cover (200), **characterised in that** backflow prevention structures (210) are arranged on an inner wall of the filter rear cover (200); wherein each backflow prevention structure (210) is a scaly convex structure, a side section of which is in the shape of straight teeth.

2. The thread debris filtering apparatus according to claim 1, wherein a height of each backflow prevention structure (210) is 1/10 to 1/2 of a distance formed after the filter front cover (100) and the filter rear cover (200) are closed.

3. The thread debris filtering apparatus according to claim 1, wherein the water inlet (220) is arranged in the upper part of the filter rear cover (200); the backflow prevention structures (210) are arranged below the water inlet (220) and close to the water inlet (220); and a setting area of the backflow prevention structures (210) is less than or equal to 1/2 of an area of the inner wall of the filter rear cover (200).

4. The thread debris filtering apparatus according to claim 1, wherein the backflow prevention structures (210) are formed by a series of convex structures, which are arranged on the inner wall of the filter rear cover (200) and arranged in a staggered manner.

5. The thread debris filtering apparatus according to any of claims 1-4, wherein the thread debris filter is installed on a filtering cover (300) arranged on an inner drum of a washing machine; and a distance is formed between the cover wall of the filter rear cover at the lower part of the water inlet (220) and the inner drum of the washing machine.

6. The thread debris filtering apparatus according to claim 5, wherein a water supply guiding structure (310) is arranged on the filtering cover (300) at the lower part of the thread debris filter; and the water supply guiding structure (310) is formed by recessing a cover wall of the filtering cover (300) towards a direction of the inner drum of the washing machine.

7. The thread debris filtering apparatus according to claim 6, wherein a distance between an inwards recessed inner wall of the water supply guiding structure (310) and the inner drum of the washing machine is less than or equal to a distance between a bottom wall of the filter rear cover (200) and the inner drum of the washing machine.

8. The thread debris filtering apparatus according to claim 1, wherein the water filtering part (110) comprises a filtering frame and a filtering screen; the filtering frame is a frame structure provided with a plurality of water-through ports; and the filtering screen is attached to the frame structure.

9. The thread debris filtering apparatus according to claim 1, wherein the water filtering part (110) is formed by small through holes which are arranged in the filter front cover (100).

## Patentansprüche

1. Fadenschmutz-Filtervorrichtung für eine Waschmaschine, umfassend ein Fadenschmutzfilter, wobei das Fadenschmutzfilter einen Filtervorderdeckel (100) und einen damit verbundenen Filterhinterdeckel (200) umfasst; ein Wasserfilterteil (110) auf dem Filtervorderdeckel (100) angeordnet wird; und ein Wassereinlass (220) in dem Filterhinterdeckel (200) angeordnet wird, **dadurch gekennzeichnet, dass** Rückflussverhinderungsstrukturen (210) auf einer Innenwand des Filterhinterdeckels (200) angeordnet werden; wobei jede Rückflussverhinderungsstruktur (210) eine konvexe Schuppenstruktur ist, wobei deren Seitenabschnitt in der Form von geraden Zähne ist.

2. Fadenschmutz-Filtervorrichtung nach Anspruch 1, wobei eine Höhe jeder Rückflussverhinderungsstruktur (210) 1/10 bis 1/2 eines Abstands darstellt, der gebildet wird, nachdem der Filtervorderdeckel (100) und der Filterhinterdeckel (200) geschlossen werden.

3. Fadenschmutz-Filtervorrichtung nach Anspruch 1, wobei der Wassereinlass (220) in dem oberen Teil des Filterhinterdeckels (200) angeordnet wird; die Rückflussverhinderungsstrukturen (210) unterhalb des Wassereinlasses (220) und nahe dem Wassereinlass (220) angeordnet werden; und ein Einstellbereich der Rückflussverhinderungsstrukturen (210) kleiner oder gleich 1/2 eines Bereichs der Innenwand des Filterhinterdeckels (200) ist.

4. Fadenschmutz-Filtervorrichtung nach Anspruch 1, wobei die Rückflussverhinderungsstrukturen (210) durch eine Reihe konvexer Strukturen gebildet werden, die auf der Innenwand des Filterhinterdeckels (200) angeordnet und in einer versetzten Weise angeordnet werden.

5. Fadenschmutz-Filtervorrichtung nach einem der Ansprüche 1 bis 4, wobei das Fadenschmutzfilter auf einem auf einer Innentrommel einer Waschmaschine angeordneten Filterdeckel (300) installiert wird; und ein Abstand zwischen der Deckelwand des Filterhinterdeckels an dem unteren Teil des Wassereinlasses (220) und der Innentrommel der Waschmaschine gebildet wird.

6. Fadenschmutz-Filtervorrichtung nach Anspruch 5, wobei eine Zufuhrstruktur (310) der Wasserversorgung auf dem Filterdeckel (300) an dem unteren Teil des Fadenschmutzfilters angeordnet wird; und die Zufuhrstruktur der Wasserversorgung (310) durch ein Vertiefen einer Deckelwand des Filterdeckels (300) in Richtung einer Richtung der Innentrommel der Waschmaschine gebildet wird.

7. Fadenschmutz-Filtervorrichtung nach Anspruch 6, wobei ein Abstand zwischen einer einwärts gerichteten, vertieften Innenwand der Zufuhrstruktur (310) der Wasserversorgung und der Innentrommel der Waschmaschine kleiner oder gleich einem Abstand zwischen einer Bodenwand des Filterhinterdeckels (200) und der Innentrommel der Waschmaschine ist.

8. Fadenschmutz-Filtervorrichtung nach Anspruch 1, wobei das Wasserfilterteil (110) einen Filterrahmen und ein Filtersieb umfasst; wobei der Filterrahmen aus einer Rahmenstruktur besteht, die mit einer Vielzahl von Wasserdurchtrittsanschlüssen bereitgestellt wird; und das Filtersieb mit der Rahmenstruktur verbunden wird.

9. Fadenschmutz-Filtervorrichtung nach Anspruch 1, wobei das Wasserfilterteil (110) durch kleine Durchgangslöcher gebildet wird, die in dem Filtervorderdeckel (100) angeordnet werden.

## Revendications

1. Appareil de filtration de débris de fil pour machine à laver, comprenant un filtre de débris de fil, ledit filtre de débris de fil comprenant un couvercle avant de filtre (100) et un couvercle arrière de filtre (200) relié à celui-ci ; une partie de filtration d'eau (110) étant disposée sur le couvercle avant de filtre (100) ; et une entrée d'eau (220) étant disposée dans le couvercle arrière de filtre (200), **caractérisé en ce que** des structures de prévention de reflux (210) sont disposées sur une paroi intérieure du couvercle arrière de filtre (200) ; chaque structure de prévention de reflux (210) étant une structure convexe écailleuse, une section latérale de laquelle étant en forme de dent droite.

2. Appareil de filtration de débris de fil selon la revendication 1, la hauteur de chaque structure de prévention de reflux (210) représentant 1/10 à 1/2 de la distance formée après la fermeture du couvercle avant de filtre (100) et du couvercle arrière de filtre (200).

3. Appareil de filtration de débris de fil selon la revendication 1, ladite entrée d'eau (220) étant disposée dans la partie supérieure du couvercle arrière de filtre (200) ; lesdites structures de prévention de reflux (210) étant disposées en dessous de l'entrée d'eau (220) et à proximité de l'entrée d'eau (220) ; et une zone de disposition des structures de prévention de reflux (210) étant supérieure ou égale à 1/2 de la surface de la paroi intérieure du couvercle arrière de filtre (200).

4. Appareil de filtration de débris de fil selon la revendication 1, lesdites structures de prévention de reflux (210) étant formées d'une série de structures convexes, qui sont disposées sur la paroi intérieure du couvercle arrière de filtre (200) et disposées de façon décalée.

5. Appareil de filtration de débris de fil selon l'une quelconque des revendications 1 à 4, ledit filtre de débris de fil étant installé sur un couvercle filtrant (300) disposé sur le tambour interne d'une machine à laver ; et une distance étant formée entre la paroi de couvercle du couvercle arrière de filtre au niveau de la partie inférieure de l'entrée d'eau (220) et le tambour interne de la machine à laver.

6. Appareil de filtration de débris de fil selon la revendication 5, une structure de guidage d'alimentation d'eau (310) étant disposée sur le couvercle filtrant (300) au niveau de la partie inférieure du filtre de débris de fil ; et la structure de guidage d'alimentation d'eau (310) étant formée en renfonçant une paroi de couvercle du couvercle filtrant (300) dans la direction du tambour interne de la machine à laver.

7. Appareil de filtration de débris de fil selon la revendication 6, la distance entre une paroi intérieure renfoncée vers l'intérieur de la structure de guidage d'alimentation d'eau (310) et le tambour interne de la machine à laver étant inférieure ou égale à la distance entre une paroi inférieure du couvercle arrière de filtre (200) et le tambour interne de la machine à laver.

8. Appareil de filtration de débris de fil selon la revendication 1, la partie de filtration d'eau (110) comprenant un cadre filtrant et un tamis filtrant ; le cadre filtrant étant une structure de cadre pourvue d'une pluralité d'orifices traversants pour le passage de l'eau ; et le tamis filtrant étant fixé à la structure de cadre.

9. Appareil de filtration de débris de fil selon la revendication 1, ladite partie de filtration d'eau (110) étant formée par de petits trous traversants qui sont disposés dans le couvercle avant de filtre (100).
